# EUROPEAN PATENT APPLICATION

(11) **EP 2 627 099 A1**
(43) Date of publication of application: **14.08.2013**
(21) Application number: 12154275.7
(22) Date of filing: 07.02.2012
(51) Int. Cl.: H04N 21/426, H04N 21/434, H04N 21/436, H04N 21/418

(54) **Method and apparatus for descrambling multi program transport streams**

(71) Applicant: TP Vision Holding B.V., 5656 AE Eindhoven (NL)
(72) Inventor: The designation of the inventor has not yet been filed
(74) Representative: Nederlandsch Octrooibureau

(57) **Abstract**

A method for descrambling a first multi program transport stream and a second multi program transport stream for an electronic host, the first and second multi program transport stream being configured for transporting multiple digital programs, the first and second multi program transport stream comprising multiple packets having one of multiple packet identifiers, the method comprising
- obtaining the first multi program transport stream,
- obtaining the second multi program transport stream,
- obtaining a first list of packet identifiers,
- filtering the first multi program transport stream to obtain a first filtered program transport stream, by removing packets from the first multi program transport having a packet identifier not on the first list of packet identifiers,
- time multiplexing the first filtered program transport stream and the second multi program transport stream to obtain a time multiplexed program transport stream,
- transferring the time multiplexed program transport stream to a descramble module (200) to obtain a descrambled time multiplexed program transport stream,
- receiving the descrambled time multiplexed program transport from the descramble module.

## Description

### BACKGROUND OF THE INVENTION

The current common interface specification 1.3 has a limitation whereby the architecture only supports a single Transport Stream being routed via the CI Plus interface, through the Module and back to the Host.

This imposes a limitation on CI Plus v1.3 PVR implementations that may be limited to support of a single DVB tuner per discrete instance of CI Plus.

To overcome this limitation it would be possible to implement a discrete CI Plus interface per tuner, but this would not be economically feasible.

### SUMMARY OF THE INVENTION

In an advantageous method for descrambling a first multi program transport stream and a second multi program transport stream for an electronic host, the first and second multi program transport stream being configured for transporting multiple digital programs, the first and second multi program transport stream comprising multiple packets having one of multiple packet identifiers. The method comprising obtaining the first multi program transport stream, obtaining the second multi program transport stream, obtaining a first list of packet identifiers, filtering the first multi program transport stream to obtain a first filtered program transport stream, by removing packets from the first multi program transport having a packet identifier not on the first list of packet identifiers, time multiplexing the first filtered program transport stream and the second multi program transport stream to obtain a time multiplexed program transport stream, transferring the time multiplexed program transport stream to a descramble module to obtain a descrambled time multiplexed program transport stream, and receiving the descrambled time multiplexed program transport from the descramble module.

This method enables support of a 'typical' two-tuner PVR as found in the market today with a single instance of CI Plus interface/Module. The invention is compatible with DVB CI Plus v1.3, incorporated herein by reference.

A consumer can watch one programme whilst recording another using a dualtuner PVR configuration where CAS/DRM protection may be applied on either or both tuners and access is provided via a single DVB CI Plus Module.

In the context a tuner (e.g. a source) may deliver an MPEG-2 Transport Stream over one of DVB Terrestrial, Satellite, Cable, or IP.

Multiple MPEG-2 Transport Streams recording for CI PLUS modules (current module can only descramble one MPTS at the time and is therefore not suited for recording (multiple tuner) scenarios). This may be supported by selecting a minimum set of PIDs for multistream CI PLUS modules.

The CI CPLUS module can only handle one MPEG-2 Transport Stream at the time. This blocks PVR use-cases where the parallel processing of two or more MPEG-2 Transport Streams is required. By time multiplexing MPEG-2 Transport Streams a module could in principal address these PVR use-cases. The only restriction is the available bandwidth on the host - module i/f, which is currently limited to 96 Mbps. It is doubtful if higher bitrates (>200 Mbps) are attainable, especially if more than two MPEG-2 Transport Streams must be processed.

In advantageous embodiment MPEG-2 streams are used, however it also possible to use ISOBMFF.

The electronic device may be a mobile electronic device, e.g., the electronic device may also be a set-top box, a computer, a television etc.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code means stored on a computer readable medium for performing a method according to the invention when said program product is executed on a computer

A further aspect of the invention concerns a computer program comprising computer program code means adapted to perform all the steps of a method according to the invention when the computer program is run on a computer.

In a preferred embodiment, the computer program comprises computer program code means adapted to perform all the steps of a method according to the invention when the computer program is run on a computer. Preferably, the computer program is embodied on a computer readable medium.

### BRIEF DESCRIPTION OF THE DRAWINGS

The invention is explained in further detail by way of example and with reference to the accompanying drawings, wherein:
Fig. 1 is a block diagram illustrating a first embodiment according to the invention.
Figure 2 shows a descramble module 200.

Throughout the Figures, similar or corresponding features are indicated by same reference numerals.

### LIST OF REFERENCE NUMERALS:

- 100: a host
- 112: source A
- 114: source B
- 122: remultiplexer A
- 124: remultiplexer B
- 130: a selector
- 142: a time multiplexer
- 144: a time demultiplexer
- 152: sink A
- 154: sink B
- 200: a descrambling module
- 210: a time demultiplexer
- 222: a PID Identifier A
- 224: a PID Identifier B
- 232: a PID Filter A
- 234: a PID Filter B
- 242: a descrambler A
- 244: a descrambler B
- 250: a time multiplexer

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

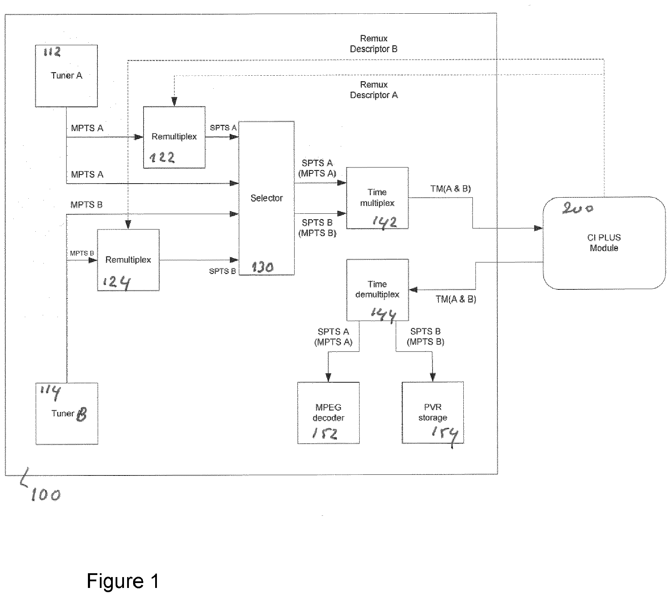

Figure 1 shows in a schematic form a first embodiment of the invention.

The Figure shows a host 100. Host 100 is an electronic device configured to process a packetized transport stream.

Typically host 100 is a television or a set-top box. For convenience, we will assume that host 100 is a television, however, host 100 could be any electronic device configured to receive multiple packetized transport stream. Host 100 typically contains the CI plus module, say as a pcmcia card.

Host 100 comprises a source A 112 (aka as the first source) and a source B 114 (aka as the second source). Source A 112 is configured to receive a transport stream A and source B 114 is configured to receive a transport stream B. Typically, source A 112 and source B 114 are tuners configured to receive a first packetized transport stream and a second packetized transport stream. However, source A and/or B could also be reading a transport stream from a storage, or receive it over an internet connection etc. The letters A and B are used to indicate the processing of the two transport streams.

The transport stream A and B are packetized transport stream. Packet in the stream comprises a packet ID (PID). Packets with the same packet ID correspond to the same elementary stream. A service corresponds to one or more elementary streams indicated. A service can be indicated by a set of packet ID. Typically, a transport stream transports multiple services. A service could be a program, for example, a television program. The program may have multiple streams corresponding to, e.g., video, one or more audio channels etc.

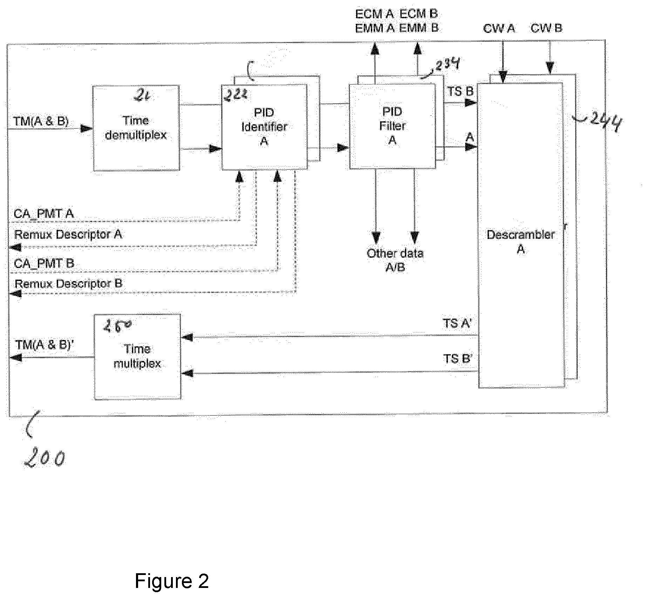

Packets are typically scrambled and need descrambling by a descrambling module 200. Figure 2 shows a descramble module 200, in this example, a CI plus module.

The transport stream may contain Program Map Tables (PMTs). A PMT indicates a set of PIDs that correspond to the same service. It may happen that one or more services require more PIDs than are indicated by the PMT.

The transport streams obtained by source A 112 and/or source B 114 may advantageously be an MPEG-2 transport stream. For example, as specified in MPEG-2 Part 1, Systems (also known as ISO/IEC standard 13818-1 or ITU-T Rec. H.222.0).

To reduce the amount of data that needs to be transferred to descramble module 200, and thus reduce bandwidth pressure on the connection between host 100 and descramble module 200, it is advantageous if host 100 filters out packets from transport streams which will not be needed. The problem is that host 100 cannot decide on the basis of the PMT alone which PIDs are required for a successful operation. For example, the transport stream may contain packets, indicated by some PID, which contain information needed for descrambling. The descrambling algorithm may be proprietary and the host may not know how the descrambling works. Alternatively, some packets, indicated by some PID, may contain application code; say code for acquiring pay per view information; say code for displaying menu or other information. In this embodiment, descramble module 200 knows which PIDs are needed for descrambling in addition to the one described in the PID. For example, descramble module 200 may know that some pre-determined PIDs are always used for key information, or it may decide based on transport id.

Host 100 is configured to descramble both transport stream A and transport stream B using a single descramble module 200. Bandwidth to descramble module 200 is reduced by filtering packets from at least one (or both) of transport stream A and transport stream B that correspond to unneeded packet IDs. host 100 may receives the required PIDs partly from a PMT in the filtered stream and partly additional information. The additional information may come from the network or from descramble module 200. In the embodiment below, the additional information comes from the descramble module 200.

Source A 112 is configured to receive a transport streams having multiple program, e.g. an MPTS. host 100 further comprises a remultiplexer 122 and remultiplexer B 124. Remultiplexer 122 and 124 are configured to reduce the amount of data in a transport stream by removing packets having a packet ID that are not needed to use a selected service (program). In particular, remultiplexer 122 and remultiplexer B 124 may transform the transport streams having multiple programs, e.g. an MPTS, to a transport stream having a single program, e.g., an SPTS.

Remultiplexer A 122 is configured to receive a remultiplex descriptor A. Remultiplex descriptor A configured remultiplexer A 122 for what packets to drop. Advantageously, Remultiplex descriptor A comprises a list of required packet IDs to consume, e.g., view, a particular service, e.g. program, in transport stream A.

Remultiplexer B 124 is configured to receive a remultiplex descriptor B. Remultiplex descriptor B configured remultiplexer B 124 for what packets to drop. Advantageously, Remultiplex descriptor B comprises a list of required packet IDs to consume, e.g., view, a particular service, e.g. program, in transport stream B.

Source A 112 is functionally connected to remultiplexer A 122. source B 114 is functionally connected to remultiplexer B 124. host 100 further comprises a selector 130.

Selector 130 is (functionally) connected to at least four inputs: source A 112, remultiplexer A 122, source B 114 and remultiplexer B 124. selector 130 is configured to pass through, at most one of, the transport stream A, as received by source A 112 and the remultiplexed transport stream A, as obtained by remultiplexer A 122. selector 130 is configured to pass through, at most one of, the transport stream B, as received by source B 114 and the remultiplexed transport stream B, as obtained by remultiplexer B 124.

When host 100 is using both the transport streams of source A 112 and source B 114, selector 130 will produce two transport stream, referred to as selected streams A and B. Selected stream A is either the original stream of source A 112 or the remultiplexed one of remultiplexer A 122. Selected stream B is either the original stream of source B 114 or the remultiplexed one of remultiplexer B 124.

The output of selector 130 is connected to a time multiplexer 130. Selector 130 time multiplexes the streams which selector 130 allowed to pass through. Advantageously, selector 130 alternatively takes one or more packets of selected stream A and one or more packets of selected stream B.

The new time multiplexed stream is forwarded to descramble module 200. descramble module 200 descrambles selected stream A and selected stream B. descramble module 200 thus produces a descrambled time multiplexed stream as output. Typically, descramble module 200 comprises one or more secret keys needed for descrambling descramble module 200 may contain other proprietary components needed for additional services. Often descramble module 200 will contain a smart card for increased security and easy updating.

Host 100 further comprises a time demultiplexer 144. The descrambled time multiplexed stream is time demultiplexed by a time demultiplexer 144 into a descrambled transport stream A and descrambled transport stream B. The content of descrambled transport stream A corresponds to part of the transport stream received by source A 112; However, the content of some packets have been descrambled, and some packets have been dropped. The content of descrambled transport stream B corresponds to part of the transport stream received by source B 114; However, the content of some packets have been descrambled, and some packets have been dropped.

Finally, the descrambled transport stream A and B may be used as desired. For example, one of them may be used for immediate viewing and one of them for recording (PVR). They may also both be used for viewing. For example, they may be viewed sequentially to allow fast changing of channels. For example, they may be viewed at the same time, say to allow a picture in picture application.

Remultiplexer A 122 and remultiplexer B 124 may receive the remultiplex descriptor A and B from descramble module 200 or from some other source, say the network. For example, remultiplexer A 122 and/or remultiplexer B 124, may forward the PMT corresponding to the desired program to descramble module 200. descramble module 200 obtains which additional PIDs are needed to view that particular program. A remultiplex descriptor may contain the PIDs that are in the PMT or only the additional needed PIDs. Preferably, first a CA_PMT is constructed, say by host 100, which selected from the PMT the elementary streams that are desired. For example, a language selection may be have been made for the audio channels.

Descramble module 200 may also require the original transport stream itself to decide which additional PIDs are needed. For example, descramble module 200 may obtain a transport stream ID from the transport stream and use a look-up table to determine the additional PIDs needed for that transport stream ID.

One issue that may need attention are PID conflicts. It may happen that the transports streams received by source A 112 and source B 114 have a program that uses the same PID. There are several ways to avoid this issue.

First of all, one may reserve a set A of possible PIDs to source A 112 and a non-overlapping set B of possible PIDs to source B 114. Thus no PID conflicts can arise.

Second, one may do PID remapping. For example, one of source A 112, remultiplexer A 122, selector 130 and/or a time multiplexer 142 may map the PIDs in the stream of source A 112 to the set A and one of source B 114, remultiplexer B 124, selector 130 and/or a time multiplexer 142 may map the PIDs in the stream of source B 114 to the set B. Also PIDs in PMTs, etc, are remapped. If desired, the mapping may be reverted, say in a time demultiplexer 144.

Third, modify the packets of stream A and B in such a way that the origin of the packets can be seen. One elegant way of doing this is modifying the so-called sync byte of a packet (in case of MPEG2 transport stream). One or both of the streams receive a changed, sync byte, so that the two streams have a different sync byte. Other identifiers than sync bytes may also be used. In this way, after descrambling by descramble module 200, the origin of each packet can be seen in the sync byte. Again, if needed, say in a time demultiplexer 144, the sync byte may be reverted to the original value, e.g. as dictated by a standard.

One may also signal the origin of a packet on a different interface, than the data interface, for example, a command interface, say the command interface of a CI plus module may used to indicate to descramble module 200 what stream the packet corresponds to.

During operation, host 100 and descramble module 200 may work as follows:

Initially, a user select a service A. host 100 provides a multi program transport stream A containing at least selected service A via source A 112. For example, service A is a program for viewing. Preferably, selector 130 immediately, starts to allow the multi program transport stream A to go through to descramble module 200. This allows a reduction of the time needed before usable content is obtained. At this point remultiplexer A 122, source B 114 and a time multiplexer 142 need not do anything yet.

Multi program transport stream A contains a PMT, giving some of the needed PIDs. However, due to descrambling (keys etc) and application working with service A, more PIDs may be needed than are listed in the PMT. host 100 may send the PMT to descramble module 200. host 100 may also construct a CA_PMT A based on the PMT. The CA_PMT A may contain fewer PIDs. For example, one reason to reduce a PMT to a CA_PMT is to remove unneeded streams, say foreign language audio, another may be to remove streams that are encrypted with an unsupported CA or DRM system.

Descramble module 200 responds to remultiplexer A 122 with a remultiplexer descriptor A. The remultiplexer descriptor A on its own, or together with the PMT or CA_PMT contains the PIDs needed for use of service A. remultiplexer A 122 receives the remultiplexer descriptor A and starts to filter out all packets from the multi program transport stream A that have an unneeded PID. The multi program transport stream A may thus be reduced to a single program transport stream A. Note that the invention may also be used to support simultaneous descrambling of more than a single program from the multiple programs. selector 130 is switched to start letting the reduced stream from remultiplexer A 122 through. From that point on descramble module 200 receives fewer packets from source A 112. However, all needed packets are in the stream. The user may use service A as usual, say for viewing or recording etc.

At some point the user want to access service B, say for recording. The same steps as above are then followed for service B. For example, selector 130 may start to forward the multiprogram stream B from source B 114 to a time multiplexer 142. a time multiplexer 142 will then start to combine the stream from source A 112, say a single program stream, with the multiple program stream from source B 114. Although selector 130 could also wait until a filtered version of multi program transport stream B is available. host 100 provides descramble module 200 with a CA_PMT B, obtained from a PMT in stream B and descramble module 200 a remultiplexer descriptor B (say in the form of a PID list) for service B. remultiplexer B 124 receives the descriptor and starts to filter the multi program transport stream B by removing unneeded packets, based on their PID. At that point selector 130 can switch to the filtered stream from remultiplexer B 124. descramble module 200 now only gets two reduced versions, so the interface between host 100 and descramble module 200 has reduced bandwidth requirements. Remultiplexer A 122 and remultiplexer B 124 may add a stream identifier to the selected packets; say by modifying a sync byte. a time demultiplexer 144 may use the stream identifier to split the stream into two streams.

The User can use stream B as usual using sink B 154. A sink may be any destination for descrambled content. Say sink A and/or B may be a viewing application or a recording application; say for recording in a PVR.

In a preferred application all transport streams are MPEG 2 transport streams. Below we repeat some of the ideas of the invention in a version of the embodiment of figure 1 for MPEG 2. MPEG 2 is an example of a packetized transport stream for digital content.

The invention makes better use of the limited bandwidth is made and thereby enabling multi stream PVR use-cases, it would make sense to not time multiplex fully qualified MPEG-2 Multi Program Transport Streams (MPTS) but only those PIDs that are part of the service and/or are required for correct operation of the Pay TV implementation (a so called MPEG-2 Single Program Transport Stream (SPTS)).

There are at least two approaches for finding the required PIDs: 1) the network knows or 2) the module knows.

In case the network knows. The PMT contains a descriptor that informs the host which PIDs are required in the SPTS. The host uses this information to re-multiplex the received MPTS in to a SPTS. The host repeats this for a second (or more) received MPTS. The resulting SPTSs are then time-multiplexed per Transport Stream packet and send to the module over the data i/f. A redefined sync byte allows the module to distinguish between Transport Stream packets and identifies to which SPTS they belong.

The module knows. The module replies to the host with a re-multiplex descriptor when it received the CA_PMT. The Host uses the re-multiplex descriptor to remultiplex the received MPTS in to a SPTS. The main difference between this approach and the previous one is that the module first receives a MPTS and passes this to the module for processing. Only when the host receives the re-multiplex descriptor from the module, it remultiplexes (at its own discretion) the MPTS to a SPTS.

Advantageously, two or more MPEG-2 Transport Streams are time multiplexed and subsequently demultiplexed.

Advantageously, a minimum set of PIDs is determined that is required for 1) decoding and decrypting a selected service and/or 2) the correct working of an application, say an (interactive) Pay TV implementation.

A typical scenario of viewing service A and later recording service B may comprise the following steps:
1. User selects service A
2. Host provides module with MPTS A
3. Host provides module with CA_PMT A and module returns the remux PID list for service A
4. Module descrambles service A
5. Host remuxes MPTS A to SPTS A
6. Host provides module with SPTS A (replacing MPTS A)
7. User starts recording service B
8. Host time multiplexes SPTS A and MPTS B, provides the module the result
9. Host provides module with CA_PMT B and module returns remux PID list for service B
10. Module descrambles service A & B
11. Host remuxes MPTS B to SPTS B
12. Host time multiplexes SPTS A and SPTS B, provides the module the result

In the above order, the host provides module with MPTS A stream first. This has advantages. It reduces the time until the stream content is descrambled, and can be used. Furthermore, it allows the modules to select which PIDs are needed based on information in the stream, say the transport stream ID. Accordingly, the descrambling in step 4 may be started before the filtering in step 5. But variations are possible. For example, step 4 and 5 may be reverted. Steps 2, 3, 4, and 5 may overlap in time to a degree.

In a different embodiment, the information on which PIDs are relevant is obtained from another source, say from the network, say from the PMT. In this case, one way of working could be:
1. User selects service A
2. Host obtains remux PID list for service A, say from PMT.
3. Host remuxes MPTS A to SPTS A
4. Host provides module with SPTS A (replacing MPTS A)
5. Module descrambles service A
6. User starts recording service B
7. Host obtains remux PID list for service B
8. Host remuxes MPTS B to SPTS B
9. Host time multiplexes SPTS A and SPTS B, provides the module the result
10. Module descrambles service A & B

The descrambled result may be de multiplexed as needed. Also in this method, one may start immediate descrambling, not waiting until the remuxing is in place.

Obtaining PID information from another source, say a PMT, or an extension to a PMT has the advantage that no additional communication with communication with descramble module 200 is needed. On the other hand, information on what PIDs are needed could be become public more easily. Some vendors may prefer to keep secret how they distribute key information over packets.

Figure 2 show one possible implementation of descramble module 200. descramble module 200 may be a CI Plus module.

In this example, descramble module 200 comprises a time demultiplexer 210. Time demultiplexer 210 is configured to receive from a time multiplexer 142 a stream. The stream may be a single program stream, or any combination of single and multiple program streams. Time demultiplexer 210 may identify the different streams; say on the basis of a sync byte, or on the basis of a command received via a command channel (not shown). Time demultiplexer 210 thus obtains two transport streams. For each transport stream a PID identifier module is used to obtain the needed PIDs. Descramble module 200 comprises a PID identifier A 222 and a PID identifier B 224; they receive the transport stream after demultiplexing by time demultiplexer 210 and they receive a CA_PMT. Based on these two information items they determine the needed PIDs. For example, PID identifier A 222 may determine the transport stream ID and look it up in a look-up table. The look-up table may give additional PIDs needed in addition to the PIDs in the CA_PMT. PID identifier A 222 may also have proprietary information, not included in host 100. The streams are then processed by a PID filter. Two PID filters are shown PID Filter A 232 and PID Filter B 234. Based on the PID they determine for each packet what type it is. One possibility is a content packet. Those are forwarded to the corresponding descrambler (descrambler A 242 or descrambler B 244). A second possibility is that the packets contain key information (say ECM or EMM information). Those packets are forwarded to a smartcard (not shown). A third possibility is that the packet contains 'other data'. Other data may be MHEG application data. The other data may be data needed for a data carrousel. For example, the other data may be renderable data, say a web page, or a web application. The other data is typically forwarded the host, possibly using a different channel (not shown). Note that not all packets containing descrambling information may be known, e.g., a secret PID may be used, chosen by a CA (conditional access) vendor.

A smartcard receives the key information, say, ECM and EMM, and responds with so called control words. A control word is used to descramble a content packet.

Many of the functional blocks have been drawn separately, for clarity, but could be integrated. For example, a single PID identifier A 222, PID Filter A 232, descrambler A 242 may be used, alternatively for stream A and B. For example, time demultiplexer 210 need not physically separate the two streams. Also remultiplexer A 122, remultiplexer B 124, selector 130 and a time multiplexer 142 could be integrated.

Many different ways of executing the method are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

A method according to the invention may be executed using software, which comprises instructions for causing a processor system to perform a method according to the invention Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. It will also be appreciated that such a program may have many different architectural designs. For example, a program code implementing the functionality of the method or system according to the invention may be subdivided into one or more subroutines. Many different ways to distribute the functionality among these subroutines will be apparent to the skilled person. The subroutines may be stored together in one executable file to form a self-contained program. Such an executable file may comprise computer executable instructions, for example, processor instructions and/or interpreter instructions (e.g. Java interpreter instructions). Alternatively, one or more or all of the subroutines may be stored in at least one external library file and linked with a main program either statically or dynamically, e.g. at run-time. The main program contains at least one call to at least one of the subroutines. Also, the subroutines may comprise function calls to each other. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth. These instructions may be subdivided into subroutines and/or be stored in one or more files that may be linked statically or dynamically.

The carrier of a computer program may be any entity or device capable of carrying the program. For example, the carrier may include a storage medium, such as a ROM, for example a CD ROM or a semiconductor ROM, or a magnetic recording medium, for example a floppy disc or hard disk. Furthermore, the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A method for descrambling a first multi program transport stream and a second multi program transport stream for an electronic host, the first and second multi program transport stream being configured for transporting multiple digital programs, the first and second multi program transport stream comprising multiple packets having one of multiple packet identifiers, the method comprising
- obtaining the first multi program transport stream,
- obtaining the second multi program transport stream,
- obtaining a first list of packet identifiers,
- filtering the first multi program transport stream to obtain a first filtered program transport stream, by removing packets from the first multi program transport having a packet identifier not on the first list of packet identifiers,
- time multiplexing the first filtered program transport stream and the second multi program transport stream to obtain a time multiplexed program transport stream,
- transferring the time multiplexed program transport stream to a descramble module (200) to obtain a descrambled time multiplexed program transport stream,
- receiving the descrambled time multiplexed program transport from the descramble module.

2. A method as in claim 1, further comprising
- obtaining a second list of packet identifiers,
- filtering the second multi program transport stream to obtain a second filtered program transport stream, by removing packets from the second multi program transport having a packet identifier not on the second list of packet identifiers, wherein the time multiplexing the first filtered program transport stream and the second multi program transport stream comprises time multiplexing the first filtered program transport stream and second filtered program transport stream.

3. A method as in any one of the preceding claims, wherein the first multi program transport stream comprises one or more packets, the one or more packets comprising the first list of packet identifiers.

4. A method as in claim 1 or 2, further comprising
- sending a representation of desired program of the first multi program transport stream to the descramble module,
- receiving from the descramble module at least part of the first list of packet identifiers.

5. A method as in any one of the preceding claims wherein the first and/or second multi program transport stream is an MPEG-2 multi program transport stream.

6. An apparatus for descrambling a first multi program transport stream and a second multi program transport stream, the first and second multi program transport stream being configured for transporting multiple digital programs, the first and second multi program transport stream comprising multiple packets having one of multiple packet identifiers, the apparatus comprising
- a first multi program transport receiver (source A 112) and a second multi program transport receiver (source 114),
- a first multi program transport stream filterer (remultiplexer 122) having an input to receive a first list of packet identifiers and configured to obtain a first filtered program transport stream, by removing packets from the first multi program transport having a packet identifier not on the first list of packet identifiers,
- a time multiplexer (142) configured to time multiplex the first filtered program transport stream and the second multi program transport stream to obtain a time multiplexed program transport stream,
- an interface to a descramble module (200) for transferring the time multiplexed program transport stream to a descramble module (200) and to receive a descrambled time multiplexed program transport stream from the descramble module (200).

7. An apparatus as in Claim 6, further comprising
- a second multi program transport stream filterer (remultiplexer 124) having an input to receive a second list of packet identifiers and configured to obtain a second filtered program transport stream, by removing packets from the second multi program transport having a packet identifier not on the second list of packet identifiers, and
wherein
the time multiplexer (142) is configured to time multiplex the first filtered program transport stream and the second filtered program transport stream to obtain a time multiplexed program transport stream.

8. An apparatus as in claim 6 or 7, comprising a program sender configured to send a representation of a desired program of the first multi program transport stream to the descramble module, and wherein the first multi program transport stream filterer is configured to receive from the descramble module at least part of the first list of packet identifiers.

9. An apparatus as in any one of claims 6, 7 and 8, further comprising a time demultiplexer (144) configured to demultiplex the descrambled time multiplexed program transport stream to obtain a first descrambled program transport stream corresponding to the first multi program transport stream, and to obtain a second descrambled program transport stream corresponding to the second multi program transport stream.

10. A method for descrambling a first multi program transport stream and a second multi program transport stream in a descramble module (200), the method comprising
- receiving a representation of a desired program of the first multi program transport, determining a required packet identifier, and sending the required packet identifier.

11. A method as in claim 10 further comprising
- receiving a time multiplexed program transport stream containing a time multiplexed first filtered program transport stream and a second multi program transport stream,
- obtain a packet from the first filtered program transport stream having the required packet identifier,
- obtaining a content packet from the first filtered program transport stream having a packet identifier different from the required packet identifier,
- descrambling the first filtered program transport stream and the second multi program transport stream to obtain first descrambled program transport stream and a second descrambled program transport stream respectively, descrambling the first filtered program transport stream at least descrambles the content packet.

12. A method as in Claim 10, wherein the packet from the first filtered program transport stream having the required packet identifier contains
- key information used in the descrambling the first filtered program transport stream, or
- application information used in a software or rendering application.

13. A method comprising method 1 and 10.

14. A computer program comprising computer program code means adapted to perform all the steps of any one of the preceding method claims when the computer program is run on a computer.

15. A computer program as claimed in claim 13 embodied on a computer readable medium.
